# EUROPEAN PATENT SPECIFICATION

(11) **EP 4 167 364 B1**
(45) Date of publication and mention of the grant of the patent: **09.12.2026**
(21) Application number: 21915707.0
(22) Date of filing: 24.12.2021
(51) Int. Cl.: H01M 10/04, H01M 50/209, H01M 50/242, H01M 50/249, H01M 50/264

(54) **BATTERY MODULE HAVING STRUCTURE CAPABLE OF ABSORBING SWELLING, AND BATTERY PACK AND VEHICLE COMPRISING SAME**
BATTERIEMODUL MIT STRUKTUR ZUR ABSORPTION VON QUELLUNG SOWIE BATTERIEPACK UND FAHRZEUG DAMIT
MODULE DE BATTERIE COMPORTANT UNE STRUCTURE CAPABLE D'ABSORBER UN GONFLEMENT, ET BLOC-BATTERIE ET VÉHICULE COMPRENANT CELUI-CI

(30) Priority: 29.12.2020 KR 20200186475
(43) Date of publication of application: 19.04.2023
(73) Proprietor: LG Energy Solution, Ltd., Seoul 07335 (KR)
(72) Inventor: KIM, Dong-Wook, Daejeon 34122 (KR); KIM, Jae-Yeong, Daejeon 34122 (KR); CHOI, Gi-Young, Daejeon 34122 (KR)
(74) Representative: Goddar, Heinz J.
(86) International application number: PCT/KR2021/019893
(87) International publication number: WO 2022/145909

(56) References cited:
- EP-A2- 1 523 051
- CN-A- 103 594 745
- CN-U- 204 407 383
- JP-A- 2020 047 522
- KR-A- 20060 060 800
- KR-A- 20070 014 653
- KR-A- 20130 123 762
- KR-A- 20190 110 349
- US-A1- 2004 021 442
- US-A1- 2013 136 963
- US-A1- 2017 214 009

## Description

### TECHNICAL FIELD

The present disclosure relates to a battery module having a structure capable of absorbing swelling and a battery pack and a vehicle including the battery module, and more particularly, to a battery module having a structure capable of effectively absorbing swelling of a battery cell by increasing the resistance of an end plate against bending deformation without increasing a thickness of the end plate.

The present application claims priority to Korean Patent Application No. 10-2020-0186475 filed on December 29, 2020 in the Republic of Korea.

### BACKGROUND ART

CN 204 407 383 U relates to a soft packaging battery pack device.

EP 1 523 051 A2 relates to a battery that has an optimum configuration as a power source to supply large energy in high energy density in a small size with lightweight.

US 2013/136963 A1 relates to a battery module and a battery system.

JP 2020 047522 A relates to an electricity storage module.

US 2017/214009 A1 relates to a battery pack having a plurality of secondary batteries.

US 2004/021442 A1 relates to a battery module composed by stacking a plurality of stacked cells packaged in a metal composite film.

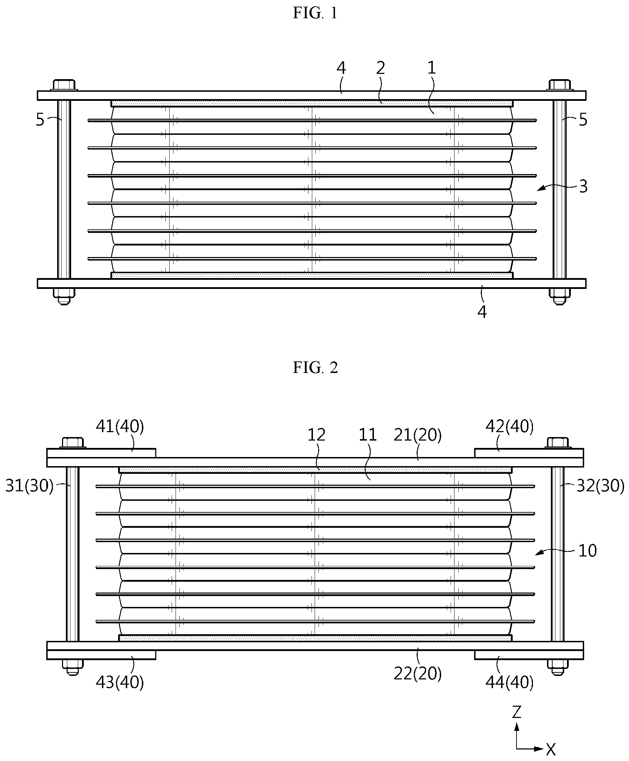

In a conventional battery module as shown in FIG. 1, end plates 4 are located on both sides of a cell stack 3 including a battery cell 1 and a swelling absorbing pad 2 in a stacked direction of the cell stack 3, and the pair of end plates 4 are fixed to each other by a fastening bolt 5.

In this battery module structure, the end plates 4 constrain deformation due to swelling of the battery cell 3. The swelling absorbing pad 2 is located at an outermost portion of the cell stack 3 and/or between adjacent battery cells 1 to primarily absorb deformation due to swelling of the battery cell 1.

Also, when swelling exceeding a level at which the swelling absorbing pad 2 may absorb deformation occurs, volume expansion of the battery cell 1 is limited by the end plates 4. The end plates 4 should have appropriate stiffness so that the end plates 4 do not excessively constrain swelling. To this end, a swelling test of the battery cell 1 according to repeated charging and discharging should be performed, and a verification procedure should be performed to prevent structural damage to the battery module based on a result of the test.

As the number of charge and discharge cycles increases, a swelling force applied to the module may gradually increase, and thus, the performance of the battery cell 1 may be degraded and a lifetime of the battery cell 1 may also be reduced. In the battery cell 1, when a large swelling force is locally applied, a separator in the battery cell 1 may be partially compressed, thereby degrading the performance of the battery cell 1. In contrast, when a pressing force is too weak, a problem may occur due to generation of gas in the battery cell 1.

In the conventional battery module structure, when a thickness of the end plate 4 is reduced for weight reduction, bending stiffness of the end plate 4 is not sufficient, and thus, bending deformation intensively occurs in a portion of the end plate 4 corresponding to a central portion of the battery cell 1 due to a swelling force. Due to this partial deformation of the end plate 4, pressure deviation with respect to a plurality of battery cells 1 constituting the cell stack 3 and pressure deviation according to a position in one battery cell 1 increase, thereby leading to performance degradation of the battery module.

Accordingly, there is a demand to develop a battery module structure capable of applying a uniform force to the entire cell stack 3 when swelling of the battery cell 1 occurs.

### DISCLOSURE

### Technical Problem

The present disclosure is designed to solve the problems of the related art, and therefore the present disclosure is directed to applying uniform pressure to a battery cell by reducing the amount of bending deformation of an end plate due to swelling without increasing a thickness of the end plate.

Also, the present disclosure is directed to preventing pressure applied to a battery cell from excessively increasing due to a reduction in the amount of bending deformation of an end plate.

However, the technical purpose to be solved by the present disclosure is not limited to the above, and other objects not mentioned herein will be clearly understood by one of ordinary skill in the art from the following disclosure.

### Technical Solution

In one aspect of the present disclosure, there is provided a battery module including: a cell stack including a plurality of battery cells; a first end plate and a second end plate respectively covering a top surface and a bottom surface of the cell stack; a first upper reinforcing plate and a second upper reinforcing plate located on the first end plate and respectively extending from a side and the other side of the first end plate in a longitudinal direction of the first end plate toward a central portion; a first lower reinforcing plate and a second lower reinforcing plate located on the second end plate and respectively extending from a side and the other side of the second end plate in a longitudinal direction of the second end plate toward a central portion; a first fastening bolt located on a side of the cell stack in a longitudinal direction of the cell stack, and passing through the first upper reinforcing plate, the first end plate, the second end plate, and the first lower reinforcing plate; and a second fastening bolt located on the other side of the cell stack in the longitudinal direction of the cell stack, and passing through the second upper reinforcing plate, the first end plate, the second end plate, and the second lower reinforcing plate.

The first upper reinforcing plate and the second upper reinforcing plate may extend toward each other but may be spaced apart from each other, and the first lower reinforcing plate and the second lower reinforcing plate may extend toward each other but may be spaced apart from each other.

A pair of first fastening bolts and a pair of second fastening bolts may be respectively provided on an end portion and the other end portion of the battery module in a width direction of the battery module.

A pair of first upper reinforcing plates and a pair of first lower reinforcing plates may be respectively provided on an end portion and the other end portion of the battery module in the width direction of the battery module, and a pair of second upper reinforcing plates and a pair of second lower reinforcing plates may be respectively provided on an end portion and the other end portion of the battery module in the width direction of the battery module.

The first upper reinforcing plate and the first lower reinforcing plate may be respectively fastened to the upper end plate and the lower end plate by a pair of first fastening bolts, and the second upper reinforcing plate and the second lower reinforcing plate may be respectively fastened to the upper end plate and the lower end plate by a pair of second fastening bolts.

Each of the first fastening bolt and the second fastening bolt includes an upper bolt and a lower bolt that are spaced apart from each other, wherein the battery module further includes a pressure relief coupler connecting the upper bolt to the lower bolt.

The pressure relief coupler may include: a first main hinge coupled to the upper bolt; a second main hinge coupled to the lower bolt; and a first connection bar fastened between the first main hinge and the second main hinge.

The pressure relief coupler may further include a pair of first sub-connection bar assemblies provided on a side and the other side of the first connection bar, and hinged to the first main hinge and the second main hinge.

Each of the pair of first sub-connection bar assemblies may include: a pair of first sub-connection bars respectively hinged to the first main hinge and the second main hinge; and a first sub-hinge hinged between the pair of first sub-connection bars.

A sum of lengths of the pair of first sub-connection bars may be greater than a length of the first connection bar.

The pressure relief coupler may further include a pair of second sub-connection bar assemblies provided on a side and the other side of the first connection bar, located more outside the first sub-connection bar assembly, and hinged to the first main hinge and the second main hinge.

Each of the pair of second sub-connection bar assemblies may include: a pair of second sub-connection bars respectively hinged to the first main hinge and the second main hinge; and a second sub-hinge hinged between the pair of second sub-connection bars.

A sum of lengths of the pair of second sub-connection bars may be greater than a sum of lengths of the pair of first sub-connection bars.

In another aspect of the present disclosure, there are also provided a battery pack and a vehicle including the battery module according to an embodiment of the present disclosure.

### Advantageous Effects

According to an aspect of the present disclosure, uniform pressure may be applied to a battery cell by reducing the amount of bending deformation of an end plate due to swelling without increasing a thickness of the end plate.

Also, according to another aspect of the present disclosure, pressure applied to a battery cell may be prevented from excessively increasing due to a reduction in the amount of bending deformation of an end plate.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a conventional battery module.
FIG. 2 is a side view illustrating a battery module according to an embodiment of the present disclosure.
FIGS. 3 and 4 are plan views illustrating the battery module of FIG. 2.
FIG. 5 is a side view illustrating a battery module according to another embodiment of the present disclosure.
FIG. 6 is a view illustrating a pressure relief coupler applied to a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

Referring to FIG. 2, a battery module according to an embodiment of the present disclosure includes a cell stack 10, an end plate 20, a reinforcing plate 40, and a fastening bolt 30.

The cell stack 10 includes a plurality of battery cells 11. For example, a pouch-type battery cell may be used as the battery cell 11. Although not shown in FIG. 2, the battery cell 11 includes a pair of electrode leads (not shown) extending to the outside of the battery cell 11 in a longitudinal direction (direction parallel to an X-axis) of the battery cell 11. The pair of electrode leads may be drawn in the same direction or opposite directions. The plurality of battery cells 11 are stacked in a vertical direction (direction parallel to a Z-axis).

The cell stack 10 may further include a swelling absorbing pad 12 located between adjacent battery cells 11 and/or located at an outermost position in a stacked direction (direction parallel to the Z-axis) of the cell stack 10. The swelling absorbing pad 12 may be compressed during swelling of the battery cell 1 due to repeated charging and discharging to absorb volume expansion of the battery cell 11.

The end plate 20 includes a first end plate 21 covering a top surface of the cell stack 10 and a second end plate 22 covering a bottom surface of the cell stack 10. The first end plate 21 and the second end plate 22 have areas corresponding to each other. The first end plate 21 and the second end plate 22 have areas greater than that of the cell stack 10 to facilitate coupling using the fastening bolt 30.

Each of the first end plate 21 and the second end plate 22 has sufficient stiffness to protect the cell stack 10 from external impact and suppress volume expansion due to swelling. Each of the first end plate 21 and the second end plate 22 may be formed of a metal material by considering such functions.

The reinforcing plate 40 includes a first upper reinforcing plate 41 and a second upper reinforcing plate 42 located on the first end plate 21, and a first lower reinforcing plate 43 and a second lower reinforcing plate 44 located on the second end plate 22.

The first upper reinforcing plate 41 extends from a side of the first end plate 21 in a longitudinal direction (parallel to the X-axis) of the first end plate 21 toward a central portion. The second upper reinforcing plate 42 extends from the other side of the first end plate 21 in the longitudinal direction of the first end plate 21 toward the central portion. The first upper reinforcing plate 41 and the second upper reinforcing plate 42 extend toward each other but are spaced apart from each other.

The first lower reinforcing plate 43 extends from a side of the second end plate 22 in a longitudinal direction (direction parallel to the X-axis) of the second end plate 22 toward a central portion. The second lower reinforcing plate 44 extends from the other side of the second end plate 22 in the longitudinal direction of the second end plate 22 toward the central portion. The first lower reinforcing plate 43 and the second lower reinforcing plate 44 extend toward each other but are spaced apart from each other.

When the battery cell 11 swells, a portion where volume expansion intensively occurs is a central portion of the battery cell 11 in the longitudinal direction (direction parallel to the X-axis). Accordingly, each of the upper end plate 21 and the lower end plate 22 is subjected to intensive pressure at a central portion in the longitudinal direction (direction parallel to the X-axis).

The first upper reinforcing plate 41 and the second upper reinforcing plate 42 partially reinforce stiffness of the upper end plate 21, and thus, a strain of the upper end plate 21 due to swelling pressure is reduced. Likewise, the first lower reinforcing plate 43 and the second lower reinforcing plate 44 partially reinforce stiffness of the lower end plate 22, and thus, a strain of the lower end plate 22 due to swelling pressure is reduced.

Because the first upper reinforcing plate 41 and the second upper reinforcing plate 42 partially reinforce the upper end plate 21, bending stiffness of the upper end plate 21 may be effectively reinforced without significantly increasing a weight of the battery module. Also, because the first upper reinforcing plate 41 and the second upper reinforcing plate 42 are spaced apart from each other without being connected to each other, excessive suppression of volume expansion due to swelling may be prevented. Likewise, because the first lower reinforcing plate 43 and the second lower reinforcing plate 44 partially reinforce the lower end plate 22, bending stiffness of the lower end plate 22 may be effectively reinforced without significantly increasing a weight of the battery module. Also, because the first lower reinforcing plate 43 and the second lower reinforcing plate 44 are spaced apart from each other without being connected to each other, excessive suppression of volume expansion due to swelling may be prevented.

The fastening bolt 30 includes a first fastening bolt 31 located on a side of the cell stack 10 in a longitudinal direction (direction parallel to the X-axis) of the cell stack 10 and a second fastening bolt 32 located on the other side of the cell stack 10 in the longitudinal direction of the cell stack 10.

The first fastening bolt 31 passes through an end portion of each of the first upper reinforcing plate 41, the first end plate 21, the second end plate 22, and the first lower reinforcing plate 43 in the longitudinal direction (direction parallel to the X-axis). Due to the first fastening bolt 31, the upper end plate 21 and the lower end plate 22 are closely fixed to the cell stack 10. Due to the first fastening bolt 31, the first upper reinforcing plate 41 and the second lower reinforcing plate 43 are respectively closely fixed to the upper end plate 21 and the lower end plate 22.

The second fastening bolt 32 passes through the other end portion of each of the second upper reinforcing plate 42, the first end plate 21, the second end plate 2, and the second lower reinforcing plate 44 in the longitudinal direction (directions parallel to the X-axis). Due to the second fastening bolt 32, the upper end plate 21 and the lower end plate 22 are closely fixed to the cell stack 10. Due to the second fastening bolt 32, the second upper reinforcing plate 42 and the second lower reinforcing plate 44 are respectively closely fixed to the upper end plate 21 and the lower end plate 22.

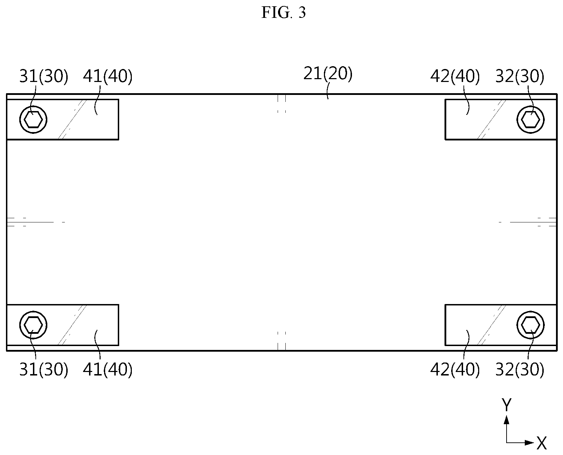

Referring to FIGS. 2 and 3, a pair of first fastening bolts 31 and a pair of second fastening bolts 32 may be respectively provided on an end portion and the other end portion of the battery module in a width direction (direction parallel to a Y-axis) of the battery module. In this case, a pair of first upper reinforcing plates 41 and a pair of first lower reinforcing plates 43 may be respectively provided on an end portion and the other end portion of the battery module in the width direction of the battery module. Likewise, a pair of second upper reinforcing plates 42 and a pair of second lower reinforcing plates 44 may be respectively provided on an end portion and the other end portion of the battery module in the width direction of the battery module.

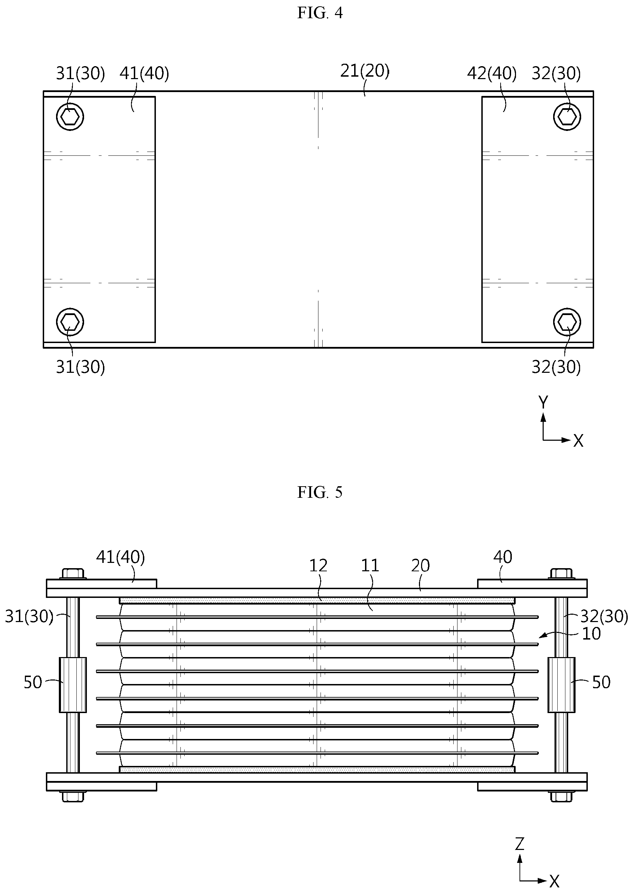

Referring to FIGS. 2 and 4, unlike in FIG. 3, one first upper reinforcing plate 41 and one first lower reinforcing plate 43 may be provided on an end portion of the battery module in a longitudinal direction of the battery module. In this case, each of the first upper reinforcing plate 41 and the first lower reinforcing plate 43 extends from an end portion toward the other end portion of the battery module in a width direction of the battery module, and the upper end plate 21 and the lower end plate 22 are fastened by a pair of first fastening bolts 31.

Likewise, one second upper reinforcing plate 42 and one second lower reinforcing plate 44 may be provided on the other end portion of the battery module in the longitudinal direction of the battery module. In this case, each of the second upper reinforcing plate 42 and the second lower reinforcing plate 44 extends from an end portion toward the other end portion of the battery module in the width direction of the battery module, and the upper end plate 21 and the lower end plate 22 are fastened by a pair of second fastening bolts 32.

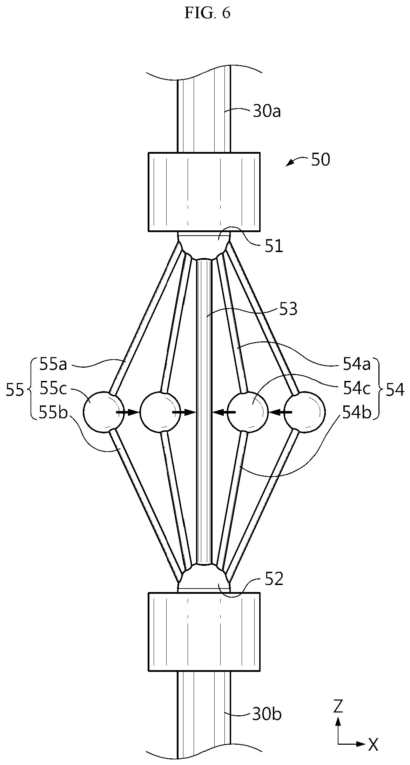

Referring to FIGS. 5 and 6, each of the first fastening bolt 31 and the second fastening bolt 32 include an upper bolt 30a and a lower bolt 30b that are spaced apart from each other. The battery module further includes a pressure relief coupler 50 that connects the upper bolt 30a to the lower bolt 30b.

The pressure relief coupler 50 includes a first main hinge 51 coupled to the upper bolt 30a, a second main hinge 52 coupled to the lower bolt 30b, and a first connection bar 53 fastened between the first main hinge 51 and the second main hinge 52. The first connection bar 53 prevents pressure applied to the battery cell 11 from excessively increasing due to the end plate 20 whose bending stiffness is increased according to the application of the reinforcing plate 40.

To perform this function, the first connection bar 53 has a bar shape having a smaller thickness than the upper bolt 30a and the lower bolt 30b constituting the fastening bolt 30. The upper bolt 30a and the lower bolt 30b, and the first connection bar 53 are all formed of a metal material. The upper bolt 30a and the lower bolt 30b having a relative large thickness hardly elongate even when a force in a vertical direction (direction parallel to the Z-axis) is applied to the end plate 20 due to swelling pressure. In contrast, when a large force is applied to the end plate 20, the first connection bar 53 having a relatively small thickness may elongate by a certain length to reduce pressure applied to the cell stack 10. When pressure applied to the cell stack 10 is too high, pores of a separator in the battery cell 11 may be blocked, and thus, the performance of the battery cell 11 nay be degraded. The pressure relief coupler 50 corresponds to an element applied to prevent performance degradation of the battery cell 11.

The pressure relief coupler 50 may further include at least a pair of first sub-connection bar assemblies 54 provided on a side and the other side of the first connection bar 53 and hinged to the first main hinge 51 and the second main hinge 52.

The first sub-connection bar assembly 54 includes a pair of first sub-connection bars 54a, 54b respectively hinged to the first main hinge 51 and the second main hinge 52, and a first sub-hinge 54c hinged between the pair of first sub-connection bars 54a, 54b.

Each of the pair of first sub-connection bars 54a, 54b is formed of a metal material, and has a smaller thickness than the upper bolt 30a and the lower bolt 30b. A sum of lengths of the pair of first sub-connection bars 54a, 54b is greater than a length of the first connection bar 53. Accordingly, as the first connection bar 53 elongates according to an increase in swelling pressure, the first sub-hinge 54c moves toward the first connection bar 53 in an arrow direction of FIG. 6. When the first sub-hinge 54c reaches a position where the first sub-hinge 54c may no longer move, a tensile force according to swelling pressure is applied to the first sub-connection bars 54a, 564b, and thus, the first sub-connection bars 54a, 54b elongate along with the first connection bar 53, thereby reducing swelling pressure.

The pressure relief coupler 50 may further include at least a pair of second sub-connection bar assemblies 55 provided on a side and the other side of the first connection bar 53 and located more outside than the first sub-connection bar assembly 54. The pair of second sub-connection bar assemblies 55 are hinged to the first main hinge 51 and the second main hinge 52.

The second sub-connection bar assembly 55 includes a pair of second sub-connection bars 55a, 55b respectively hinged to the first main hinge 51 and the second main hinge 52, and a second sub-hinge 55c hinged between the pair of second sub-connection bars 55a, 55b.

Each of the pair of second sub-connection bars 55a, 55b is formed of a metal material, and has a smaller thickness than the upper bolt 30a and the lower bolt 30b. A sum of lengths of the pair of second sub-connection bars 55a, 55b is greater than a sum of lengths of the pair of first sub-connection bars 54a, 54b. Accordingly, as the first sub-connection bars 54a, 54b elongate according to an increase in swelling pressure, the second sub-hinge 55c moves toward the first sub-connection bar assembly 54 in an arrow direction of FIG. 6. When the second sub-hinge 55c reaches a position where the second sub-hinge 55c may no longer move, a tensile force according to swelling pressure is applied to the second sub-connection bars 55a, 55b, and thus, the second sub-connection bars 55a, 55b elongate along with the first connection bar 53 and the first sub-connection bars 54a, 54b, thereby reducing swelling pressure.

Although a case where the battery module according to an embodiment of the present disclosure includes the first sub-connection bar assembly 54 and a case where the battery module includes the first sub-connection bar assembly 54 and the second sub-connection bar assembly 55 are shown in the drawings, the present disclosure is not limited thereto. That is, the battery module according to an embodiment of the present disclosure may further include an additional sub-connection bar assembly in addition to the first sub-connection bar assembly 54 and the second sub-connection bar assembly 55.

A battery pack according to an embodiment of the present disclosure includes the battery module according to an embodiment of the present disclosure as described above. Also, a vehicle according to an embodiment of the present disclosure includes the battery module according to an embodiment of the present disclosure as described above.

Although the embodiments of the present disclosure have been illustrated and described above, the present disclosure is not limited to the above-described specific embodiments, the invention being defined by the appended claims.

## Claims

1. A battery module comprising:
a cell stack (10) comprising a plurality of battery cells (11);
a first end plate (20, 21) and a second end plate (20, 22) respectively covering a top surface and a bottom surface of the cell stack (10);
a first upper reinforcing plate (41) and a second upper reinforcing plate (42) located on the first end plate (20, 21) and respectively extending from a side and the other side of the first end plate (20, 21) in a longitudinal direction of the first end plate (20, 21) toward a central portion of the first end plate (20, 21);
a first lower reinforcing plate (43) and a second lower reinforcing plate (44) located on the second end plate (20, 22) and respectively extending from a side and the other side of the second end plate (20, 22) in a longitudinal direction of the second end plate (20, 22) toward a central portion of the second end plate (20, 22);
a first fastening bolt (30, 31) located on a side of the cell stack (10) in a longitudinal direction of the cell stack (10), and passing through the first upper reinforcing plate (41), the first end plate (20, 21), the second end plate (20, 22), and the first lower reinforcing plate (43); and
a second fastening bolt (30, 32) located on the other side of the cell stack (10) in the longitudinal direction of the cell stack (10), and passing through the second upper reinforcing plate (42), the first end plate (20, 21), the second end plate (20, 22), and the second lower reinforcing plate (44),
**characterised in that** each of the first fastening bolt (30, 31) and the second fastening bolt (30, 32) comprises an upper bolt (30a) and a lower bolt (30b) that are spaced apart from each other,
wherein the battery module further comprises a pressure relief coupler (50) connecting the upper bolt (30a) to the lower bolt (30b).

2. The battery module according to claim 1, wherein the first upper reinforcing plate (41) and the second upper reinforcing plate (42) extend toward each other but are spaced apart from each other, and
the first lower reinforcing plate (43) and the second lower reinforcing plate (44) extend toward each other but are spaced apart from each other.

3. The battery module according to claim 1, wherein a pair of first fastening bolts (30, 31) and a pair of second fastening bolts (30, 32) are respectively provided on an end portion and the other end portion of the battery module in a width direction of the battery module.

4. The battery module according to claim 3, wherein a pair of first upper reinforcing plates (41) and a pair of first lower reinforcing plates (43) are respectively provided on an end portion and the other end portion of the battery module in the width direction of the battery module, and
a pair of second upper reinforcing plates (42) and a pair of second lower reinforcing plates (44) are respectively provided on an end portion and the other end portion of the battery module in the width direction of the battery module.

5. The battery module according to claim 3, wherein the first upper reinforcing plate (41) and the first lower reinforcing plate (43) are respectively fastened to the upper end plate and the lower end plate by a pair of first fastening bolts (31), and
the second upper reinforcing plate (42) and the second lower reinforcing plate (44) are respectively fastened to the upper end plate and the lower end plate by a pair of second fastening bolts (32).

6. The battery module according to claim 1, wherein the pressure relief coupler (50) comprises:
a first main hinge (51) coupled to the upper bolt (30a);
a second main hinge (52) coupled to the lower bolt (30b); and
a first connection bar (53) fastened between the first main hinge (51) and the second main hinge (52).

7. The battery module according to claim 6, wherein the pressure relief coupler (50) further comprises a pair of first sub-connection bar assemblies (54) provided on a side and the other side of the first connection bar (53) respectively, and hinged to the first main hinge (51) and the second main hinge (52).

8. The battery module according to claim 7, wherein each of the pair of first sub-connection bar assemblies (54) comprises:
a pair of first sub-connection bars (54a, 54b) respectively hinged to the first main hinge (51) and the second main hinge (52); and
a first sub-hinge (54c) hinged between the pair of first sub-connection bars (54a, 54b).

9. The battery module according to claim 8, wherein a sum of lengths of the pair of first sub-connection bars (54a, 54b) is greater than a length of the first connection bar (53).

10. The battery module according to claim 9, wherein the pressure relief coupler (50) further comprises a pair of second sub-connection bar assemblies (55) provided on a side and the other side of the first connection bar (53), located more outside the first sub-connection bar assembly (54), and hinged to the first main hinge (51) and the second main hinge (52).

11. The battery module according to claim 10, wherein each of the pair of second sub-connection bar assemblies (55) comprises:
a pair of second sub-connection bars (55a, 55b) respectively hinged to the first main hinge (51) and the second main hinge (52); and
a second sub-hinge (55c) hinged between the pair of second sub-connection bars (55a, 55b).

12. The battery module according to claim 11, wherein a sum of lengths of the pair of second sub-connection bars (55a, 55b) is greater than a sum of lengths of the pair of first sub-connection bars (54a, 54b).

13. A battery pack comprising the battery module according to any one of claims 1 through 12.

14. A vehicle comprising the battery module according to any one of claims 1 through 12.

## Patentansprüche

1. Batteriemodul, umfassend:
einen Zellenstapel (10), der eine Vielzahl von Batteriezellen (11) umfasst;
eine erste Endplatte (20, 21) und eine zweite Endplatte (20, 22), die jeweils eine obere Oberfläche und eine untere Oberfläche des Zellenstapels (10) bedecken;
eine erste obere Verstärkungsplatte (41) und eine zweite obere Verstärkungsplatte (42), die sich auf der ersten Endplatte (20, 21) befinden und sich jeweils von einer Seite und der anderen Seite der ersten Endplatte (20, 21) in einer Längsrichtung der ersten Endplatte (20, 21) in Richtung eines zentralen Abschnitts der ersten Endplatte (20, 21) erstrecken;
eine erste untere Verstärkungsplatte (43) und eine zweite untere Verstärkungsplatte (44), die sich auf der zweiten Endplatte (20, 22) befinden und sich jeweils von einer Seite und der anderen Seite der zweiten Endplatte (20, 22) in einer Längsrichtung der zweiten Endplatte (20, 22) in Richtung eines zentralen Abschnitts der zweiten Endplatte (20, 22) erstrecken;
einen ersten Befestigungsbolzen (30, 31), der sich auf einer Seite des Zellenstapels (10) in einer Längsrichtung des Zellenstapels (10) befindet und durch die erste obere Verstärkungsplatte (41), die erste Endplatte (20, 21), die zweite Endplatte (20, 22) und die erste untere Verstärkungsplatte (43) verläuft; und
einen zweiten Befestigungsbolzen (30, 32), der sich auf der anderen Seite des Zellenstapels (10) in der Längsrichtung des Zellenstapels (10) befindet und durch die zweite obere Verstärkungsplatte (42), die erste Endplatte (20, 21), die zweite Endplatte (20, 22) und die zweite untere Verstärkungsplatte (44) verläuft,
**dadurch gekennzeichnet, dass** jeder der ersten Befestigungsbolzen (30, 31) und der zweiten Befestigungsbolzen (30, 32) einen oberen Bolzen (30a) und einen unteren Bolzen (30b) umfasst, die voneinander beabstandet sind,
wobei das Batteriemodul ferner einen Druckentlastungskoppler (50) umfasst, der den oberen Bolzen (30a) mit dem unteren Bolzen (30b) verbindet.

2. Batteriemodul nach Anspruch 1, wobei sich die erste obere Verstärkungsplatte (41) und die zweite obere Verstärkungsplatte (42) auf einander zu erstrecken, aber voneinander beabstandet sind, und
sich die erste untere Verstärkungsplatte (43) und die zweite untere Verstärkungsplatte (44) auf einander zu erstrecken, aber voneinander beabstandet sind.

3. Batteriemodul nach Anspruch 1, wobei ein Paar erster Befestigungsbolzen (30, 31) und ein Paar zweiter Befestigungsbolzen (30, 32) in einer Breitenrichtung des Batteriemoduls jeweils an einem Endabschnitt und dem anderen Endabschnitt des Batteriemoduls vorgesehen sind.

4. Batteriemodul nach Anspruch 3, wobei ein Paar erster oberer Verstärkungsplatten (41) und ein Paar erster unterer Verstärkungsplatten (43) in der Breitenrichtung des Batteriemoduls jeweils an einem Endabschnitt und dem anderen Endabschnitt des Batteriemoduls vorgesehen sind, und
ein Paar zweiter oberer Verstärkungsplatten (42) und ein Paar zweiter unterer Verstärkungsplatten (44) in der Breitenrichtung des Batteriemoduls jeweils an einem Endabschnitt und dem anderen Endabschnitt des Batteriemoduls vorgesehen sind.

5. Batteriemodul nach Anspruch 3, wobei die erste obere Verstärkungsplatte (41) und die erste untere Verstärkungsplatte (43) durch ein Paar erster Befestigungsbolzen (31) jeweils an der oberen Endplatte und der unteren Endplatte befestigt sind, und
die zweite obere Verstärkungsplatte (42) und die zweite untere Verstärkungsplatte (44) durch ein Paar zweiter Befestigungsbolzen (32) jeweils an der oberen Endplatte und der unteren Endplatte befestigt sind.

6. Batteriemodul nach Anspruch 1, wobei der Druckentlastungskoppler (50) umfasst:
ein erstes Hauptscharnier (51), das mit dem oberen Bolzen (30a) gekoppelt ist;
ein zweites Hauptscharnier (52), das mit dem unteren Bolzen (30b) gekoppelt ist; und
eine erste Verbindungsstange (53), die zwischen dem ersten Hauptscharnier (51) und dem zweiten Hauptscharnier (52) befestigt ist.

7. Batteriemodul nach Anspruch 6, wobei der Druckentlastungskoppler (50) ferner ein Paar erster Unterverbindungsstangenanordnungen (54) umfasst, die jeweils auf einer Seite und der anderen Seite der ersten Verbindungsstange (53) vorgesehen und an dem ersten Hauptscharnier (51) und dem zweiten Hauptscharnier (52) angelenkt sind.

8. Batteriemodul nach Anspruch 7, wobei jedes Paar erster Unterverbindungsstangenanordnungen (54) umfasst:
ein Paar erster Unterverbindungsstangen (54a, 54b), die jeweils an dem ersten Hauptscharnier (51) und dem zweiten Hauptscharnier (52) angelenkt sind; und
ein erstes Unterscharnier (54c), das zwischen dem Paar erster Unterverbindungsstangen (54a, 54b) angelenkt ist.

9. Batteriemodul nach Anspruch 8, wobei eine Summe der Längen des Paares erster Unterverbindungsstangen (54a, 54b) größer ist als eine Länge der ersten Verbindungsstange (53).

10. Batteriemodul nach Anspruch 9, wobei der Druckentlastungskoppler (50) ferner ein Paar zweiter Unterverbindungsstangenanordnungen (55) umfasst, die auf einer Seite und der anderen Seite der ersten Verbindungsstange (53) vorgesehen sind, sich weiter außerhalb der ersten Unterverbindungsstangenanordnung (54) befinden und an dem ersten Hauptscharnier (51) und dem zweiten Hauptscharnier (52) angelenkt sind.

11. Batteriemodul nach Anspruch 10, wobei jedes Paar zweiter Unterverbindungsstangenanordnungen (55) umfasst:
ein Paar zweiter Unterverbindungsstangen (55a, 55b), die jeweils an dem ersten Hauptscharnier (51) und dem zweiten Hauptscharnier (52) angelenkt sind; und
ein zweites Unterscharnier (55c), das zwischen dem Paar zweiter Unterverbindungsstangen (55a, 55b) angelenkt ist.

12. Batteriemodul nach Anspruch 11, wobei eine Summe der Längen des Paares zweiter Unterverbindungsstangen (55a, 55b) größer ist als eine Summe der Längen des Paares erster Unterverbindungsstangen (54a, 54b).

13. Batteriepack, umfassend das Batteriemodul nach einem der Ansprüche 1 bis 12.

14. Fahrzeug, umfassend das Batteriemodul nach einem der Ansprüche 1 bis 12.

## Revendications

1. Module de batterie comprenant :
un empilement de cellules (10) comprenant une pluralité de cellules de batterie (11) ;
une première flasque (20, 21) et une deuxième flasque (20, 22) couvrant respectivement une surface supérieure et une surface inférieure de l'empilement de cellules (10) ;
une première plaque de renfort supérieure (41) et une deuxième plaque de renfort supérieure (42) situées sur la première flasque (20, 21) et déployées respectivement d'un côté et de l'autre côté de la première flasque (20, 21) dans une direction longitudinale de la première flasque (20, 21) vers une partie centrale de la première flasque (20, 21) ;
une première plaque de renfort inférieure (43) et une deuxième plaque de renfort inférieure (44) situées sur la deuxième flasque (20, 22) et s'étendant respectivement d'un côté et de l'autre côté de la deuxième flasque (20, 22) dans une direction longitudinale de la deuxième flasque (20, 22) vers une partie centrale de la deuxième flasque (20, 22) ;
un premier boulon de fixation (30, 31) situé sur un côté de l'empilement de cellules (10) dans une direction longitudinale de l'empilement de cellules (10), et traversant la première plaque de renfort supérieure (41), la première flasque (20, 21), la deuxième flasque (20, 22), et la première plaque de renfort inférieure (43) ; et
un deuxième boulon de fixation (30, 32) situé sur l'autre côté de l'empilement de cellules (10) dans une direction longitudinale de l'empilement de cellules (10), et traversant la deuxième plaque de renfort supérieure (42), la première flasque (20, 21), la deuxième flasque (20, 22), et la deuxième plaque de renfort inférieure (44),
**caractérisé en ce que** chacun du premier boulon de fixation (30, 31) et du deuxième boulon de fixation (30, 32) comporte un boulon supérieur (30a) et un boulon inférieur (30b) espacés l'un de l'autre,
le module de batterie comprenant en outre un coupleur de détente (50) raccordant le boulon supérieur (30a) au boulon inférieur (30b).

2. Module de batterie selon la revendication 1, la première plaque de renfort supérieure (41) et la deuxième plaque de renfort supérieure (42) se prolongeant l'une vers l'autre, mais étant espacées l'une de l'autre, et
la première plaque de renfort inférieure (43) et la deuxième plaque de renfort inférieure (44) se prolongeant l'une vers l'autre, mais étant espacées l'une de l'autre.

3. Module de batterie selon la revendication 1, une paire de premiers boulons de fixation (30, 31) et une paire de deuxièmes boulons de fixation (30, 32) étant agencées respectivement sur une partie terminale et l'autre partie terminale du module de batterie dans le sens de la largeur du module de batterie.

4. Module de batterie selon la revendication 3, une paire de premières plaques de renfort supérieures (41) et une paire de premières plaques de renfort inférieures (43) étant agencées respectivement sur une partie terminale et l'autre partie terminale du module de batterie dans le sens de la largeur du module de batterie, et
une paire de deuxièmes plaques de renfort supérieures (42) et une paire de deuxièmes plaques de renfort inférieures (44) étant agencées respectivement sur une partie terminale et l'autre partie terminale du module de batterie dans le sens de la largeur du module de batterie.

5. Module de batterie selon la revendication 3, la première plaque de renfort supérieure (41) et la première plaque de renfort inférieure (43) étant fixées respectivement sur la flasque supérieure et la flasque inférieure par une paire de premiers boulons de fixation (31), et
la deuxième plaque de renfort supérieure (42) et la deuxième plaque de renfort inférieure (44) étant fixées respectivement sur la flasque supérieure et la flasque inférieure par une paire de deuxièmes boulons de fixation (32).

6. Module de batterie selon la revendication 1, le coupleur de détente (50) comprenant :
une première charnière principale (51) couplée au boulon supérieur (30a) ;
une deuxième charnière principale (52) couplée au boulon inférieur (30a) ; et
une première barre de raccordement (53) fixée entre la première charnière principale (51) et la deuxième charnière principale (52).

7. Module de batterie selon la revendication 6, le coupleur de détente (50) comprenant en outre une paire de premiers ensembles de barres de sous-connexion (54) agencés sur un côté et l'autre côté de la première barre de raccordement (53), respectivement, et articulés sur la première charnière principale (51) et la deuxième charnière principale (52).

8. Module de batterie selon la revendication 7, chacun de la paire de premiers ensembles de barres de sous-connexion (54) comprenant :
une paire de premières barres de sous-connexion (54a, 54b) s'articulant respectivement avec la première charnière principale (51) et la deuxième charnière principale (52) ; et
une première sous-charnière (54c) s'articulant entre la paire de premières barres de sous-connexion (54a, 54b).

9. Module de batterie selon la revendication 8, une somme des longueurs de la paire de premières barres de sous-connexion (54a, 54b) étant supérieure à une longueur de la première barre de raccordement (53).

10. Module de batterie selon la revendication 9, le coupleur de détente (50) comprenant en outre une paire d'ensembles de deuxièmes barres de sous-connexion (55) agencées sur un côté et l'autre côté de la première barre de raccordement (53), située plus en dehors du premier ensemble de barres de sous-connexion (54), et articulé avec la première charnière principale (51) et la deuxième charnière principale (52).

11. Module de batterie selon la revendication 10, chacun de la paire de deuxièmes barres de sous-connexion (55) comprenant :
une paire de deuxièmes barres de sous-connexion (55a, 55b) articulées respectivement sur la première charnière principale (51) et la deuxième charnière principale (52) ; et
une deuxième sous-charnière (55c) s'articulant entre la paire de deuxièmes barres de sous-connexion (55a, 55b).

12. Module de batterie selon la revendication 11, une somme de longueurs de la paire de deuxièmes barres de sous-connexion (55a, 55b) étant supérieure à une somme des longueurs de la paire de premières barres de sous-connexion (54a, 54b).

13. Bloc-batterie comprenant le module de batterie selon une quelconque des revendications 1 à 12.

14. Véhicule comprenant le module de batterie selon une quelconque des revendications 1 à 12.
